# EUROPÄISCHE PATENTSCHRIFT

(11) **EP 0 900 417 B1**
(45) Veröffentlichungstag und Bekanntmachung des Hinweises auf die Patenterteilung: **22.11.2000**
(21) Anmeldenummer: 97920476.5
(22) Anmeldetag: 20.05.1997
(51) Int. Cl.: G05D 23/19, F24F 11/00

(54) **HEIM- UND GEBÄUDEAUTOMATIONSSYSTEM**
HOME AND BUILDING AUTOMATION SYSTEM
SYSTEME D'AUTOMATISATION DOMESTIQUE OU D'IMMEUBLE

(30) Priorität: 21.05.1996 CH 127096
(43) Veröffentlichungstag der Anmeldung: 10.03.1999
(73) Patentinhaber: HTS High Technology Systems AG, 8307 Effretikon (CH)
(72) Erfinder: BODMER, James, CH-8917 Oberlunkhofen (CH); PFEIFFER, Walter, Karl, D-72124 Pliezhausen (DE)
(74) Vertreter: Patentanwälte Breiter + Wiedmer AG
(86) Internationale Anmeldenummer: CH9700194
(87) Internationale Veröffentlichungsnummer: WO9744720

(56) Entgegenhaltungen:
- EP-A- 0 444 308
- EP-A- 0 589 448
- EP-A- 0 631 219
- DE-A- 19 514 027
- US-A- 5 088 645
- US-A- 5 148 977

## Beschreibung

Die Erfindung bezieht sich auf ein Verfahren nach dem Oberbegriff von Patentanspruch 1. Weiter betrifft die Erfindung ein Heim- und Gebäudeautomationssystem zur Durchführung des Verfahrens nach dem Oberbegriff von Patentanspruch 9.

Heim- und Gebäudeautomationssysteme sind mit Blick auf die Verbesserung des Komforts bereits in vielfältiger Form vorgeschlagen und realisiert worden. Staatliche Vorgaben und zunehmendes Umweltbewusstsein tragen zum allgemein wachsenden Bedürfnis bei, den Energieverbrauch im Sinne einer Schonung der globalen Ressourcen zu reduzieren.

Schon zu Beginn der Achtzigerjahre konnte die Kühl- und Heizleistung einer Klimaanlage komfort- und energiemässig raumweise beeinflusst werden, indem ein von Präsenzmeldern gesteuertes Energiekontrollsystem eingesetzt wurde, beispielsweise nach der US,A 4407447. Bei Anwesenheit einer Person in einem Raum, festgestellt und gemeldet durch den betreffenden Präsenzmelder, wird nach dieser Patentschrift von einer ungeregelten Raumtemperatur auf eine fest vorgegebene Solltemperatur geregelt, indem entsprechend warme oder kalte Luft zugeführt wird. Verlässt diese Person den Raum, so wird die Luftzufuhr wieder aufgehoben und damit der Energieverbrauch insgesamt reduziert. Dieses System reagiert damit zwar mittelbar auf den direkten Bedarf, hervorgerufen durch die Anwesenheit von wenigstens einer Person, hat aber den Nachteil, dass es im Hinblick auf dem Komfortsystem immanente Trägheiten aufweist. Beispielsweise kann so die thermische Trägheit eines zu beheizenden oder zu kühlenden Raumes nicht genügend oder gar nicht berücksichtigt werden.

In der US,A 4567557 wird ein weiterentwickeltes, als intelligent bezeichnetes Gebäudeautomationssystem beschrieben. Dieses hat ein zentral organisiertes System mit einer Vielzahl von eingangsseitigen Sensoren, welche ihre Informationen bzw. Steuerbefehle an einen zentralen Prozessor senden, und ausgangsseitige Aktuatoren, die vom Prozessor Steuerbefehle erhalten. Kennzeichnend für dieses System ist zum einen der zentralistische Ansatz, alle Informationen müssen zum zentralen Prozessor gelangen, zum andern der deterministische Ansatz, alle möglichen Fälle und Kombinationen werden programmiert und als "Verhaltensmuster" für einen späteren Aufruf gespeichert.

Im Verlauf der folgenden Jahre sind Systeme entwickelt und auf dem Markt angeboten worden, welche als "TotalHome-Systeme" bezeichnet werden. Darunter wird eine Licht- und Gerätesteuerung über das installierte Stromnetz verstanden, welche die bestehende Infrastruktur ohne nennenswerte bauliche Veränderungen nutzen kann. Das System besteht aus einer Zentraleinheit und verschiedenen Empfängereinheiten, wie Schaltern, Dimmern, Rolladensteuerung. Als Signalleitung wird, wie erwähnt, die bereits installierte 230 V Netzleitung mit Steckdosen benutzt. So können komplexe Steuersequenzen für unterschiedliche Ablaufschemata innerhalb eines Gebäudes gespeichert und repetiert werden.

Allen bekannten Systemen ist ein deterministischer Ansatz gemeinsam, der einmal programmierte Sequenzen zeitgesteuert, auf Anforderung von Sensoren oder durch menschlichen Eingriff ablaufen lässt. Damit sind diese Systeme, auch Modusprogramme genannt, nur für vorgegebene Situationen und zeitlich eingeschränkt optimal einsetzbar.

Eine Aenderung der Benutzerwünsche erfordert eine Neuprogrammierung des Systems, was einen Benutzer, in aller Regel ein Laie, überfordert oder gar abschreckt. Als Beispiel sei hier eine Umnutzung eines Kinderzimmers in einen Abstellraum erwähnt, welche grundsätzlich andere Voraussetzungen schafft. Ebenso kann von den bekannten Systemen auf spontane Aenderungen des Umfeldes und/oder des Benutzerverhaltens nicht oder nur sehr umständlich bis ungenügend reagiert werden. So ist beispielsweise ein Heimautomationssystem für Haushalte mit berufstätigen Familienmitgliedern auf eine Temperaturabsenkung während des Tages programmiert. Wenn ein Familienmitglied krankheitsbedingt zuhause bleibt, reagiert das System falsch. Es wird eine manuelle Intervention notwendig. Das Rücksetzen auf Normalbetrieb wird überdies oft vergessen.

Die CH,A 683473 offenbart ein Verfahren zur elektronisch verzögerten Abschaltung des Lichtes mit einem passiven Infrarotsensor als Bewegungsmelder. Dabei wird ein vorgegebener Ausgangswert oder ein gespeicherter Erfahrungswert für die zeitliche Verzögerung eingegeben. Dieser Wert wird automatisch und kontinuierlich an die Intensität der Bewegungen in der Reichweite des passiven Infrarotsensors adaptiert und bei veränderter Bewegungsintensität laufend eine neue zeitliche Verzögerung eingestellt. Ein spezifisches Problem, die optimale Verzögerung der Abschaltung der Beleuchtung, wird also nicht mehr ausschliesslich deterministisch bestimmt, eine intelligente Ausschaltverzögerung für Licht stimmt sich auf das Benutzerverhalten ein.

In der EP,A 0631219 wird ein Verfahren zur Temperatursteuerung und -regelung in einzelnen Wohn- und Arbeitsräumen beschrieben, welche nur selten, jedoch mit einer gewissen Regelmässigkeit benutzt werden. Dabei werden konstante Lebensgewohnheiten berücksichtigt, was bei maximaler Energieeinsparung einen optimalen Komfort bringen soll. Ein eingestellter Wert wird anhand der durch Präsenzmelder erfassten Anwesenheitszeiten an den folgenden Tagen nach einem Fuzzy-Algorithmus an die sich einstellenden Regelmässigkeiten der Raumbenutzung angepasst. Das wenigstens teilweise stochastische Verhalten von Bewohnern kann das Verfahren nicht erfassen.

Die in der US,A 5088645 beschriebene selbstlernende Temperatursteuerung und -regelung ist einzelraumbezogen, sie umfasst keine Gesamtstrategie. Die Algorithmen erfassen und speichern systematische Verhaltensänderungen. Die Raumtemperaturen werden nach dem gespeicherten Belegungsprozentsatz zeitabhängig eingestellt. Störungsfaktoren werden vom System ermittelt und integriert.

Der vorliegenden Erfindung liegt die Aufgabe zugrunde, ein Verfahren und eine Vorrichtung der eingangs genannten Art zu schaffen, welche die prozessorgesteuerte Intelligenz, die deterministische Komponente des Heim- und Gebäudeautomationssystems, auf ein Minimum reduzieren, sich selbständig an das wenigstens teilweise stochastische Verhalten von Personen in Gebäuden anpassen und dadurch sowohl Energieeinsparungen erlauben als auch eine Komfortverbesserung ermöglichen.

In bezug auf das Verfahren wird die Aufgabe erfindungsgemäss nach dem Kennzeichnen von Patentanspruch 1 gelöst. Weiterbildende und spezielle Ausführungsformen des Verfahrens sind Gegenstand von abhängigen Patentansprüchen.

Von grösster Bedeutung ist die Präsenz- und Aktivitätsüberwachung mit anwesenheits- und aktivitätsgesteuerten Regelkreisen, den neuronalen Netzen mit eigenen Rechnern, welche das regelmässige (systematische) und das dem Zufall überlassene (stochastische) Verhalten erfassen und auswerten.

Die eingangsseitig der Software, in der Regel Standardsoftware oder mit fachmännischem Wissen adaptierbare Software, welche in einer CPU oder einem Prozessor gespeichert ist, angeordneten Sensoren sind beispielsweise Bewegungsmelder aller Art. Am verbreitetsten sind passive Infrarotsensoren (PIR-Sensoren), wie sie z.B. in der CH,A 683473 oder der Firmenschrift der High Technology Systems AG, CH-8307 Effretikon vom 3. Dezember 1994 (2. Auflage 1/96) beschrieben werden. Weitere passive Systeme erfassen beispielsweise die von Personen erzeugten Geräusche oder Druckwellen. Bewegungsmelder können auch nach aktiven Prinzipien aufgebaut sein, z.B. durch Aussendung eines Ultraschall- oder Mikrowellenfeldes oder durch den Empfang des durch eine bewegte Person beeinflussten Feldes. Auch können Veränderungen eines statischen elektrischen oder elektromagnetischen Feldes detektiert und die Signale zur Auswertung durch die Software weitergeleitet werden.

Externe, in die raumbezogenen Optimierungsalgorithmen einbezogene Parameter bzw. Informationsquellen sind beispielsweise das Wetter, die Aussentemperatur, Sicherheitsmodi oder Wetterprognosen.

Sensoren sind jedoch nicht auf Bewegungsmelder beschränkt. Es sind beispielsweise auch Rauchfühler, Thermostaten, Lichtdetektoren und andere Sensoren als eingangsseitige Signalerzeuger geeignet, zur Lösung der erfindungsgemässen Aufgabe beizutragen und/oder diese zu ergänzen.

Die ausgangsseitig des Rechners, CPU oder Prozessor mit der Software, abgegebenen elektrischen Signale lösen über Aktuatoren zugeordnete Installationen oder Installationsgruppen aus. Dies erfolgt direkt oder über dazwischen geschaltete Baugruppen, insbesondere eine Summierstelle und einen PID-Regler eines anwesenheits- und aktivitätsgesteuerten Regelkreises. Die Aktuatoren können ein- oder mehrstufige Relais oder andere dem Fachmann bekannte elektromechanische Einrichtungen mit einem Schliesser, Oeffner oder Umschalter umfassenden Kontaktsatz sein. Installationen oder Installationsgruppen sind beispielsweise Beleuchtungskörper, Heizungen, Ventile für fliessende Heiz- oder Kühlmedien, Motoren für Lamellenstoren und Alarmanlagen.

Erfindungsgemäss wird nicht nur die Präsenz, sondern auch die Aktivität von wenigstens einer Person überwacht, welche sich im Erfassungsbereich einer Raumüberwachung aufhält. Die Aktivitäten werden gespeichert und von der Software zur Auslösung von Aktuatoren miteinbezogen.

Dadurch werden bei der Installation des Automationssystems gespeicherte erste Modelle des Benutzerverhaltens von wenigstens einer Person permanent an das sich ändernde Benutzerverhalten angepasst und die gesammelten Erfahrungswerte als Vorhersagebasis für die wahrscheinlichsten Folgeaktionen benutzt. Mittels selbstlernender und probalistischen/prädikativen Algorithmen werden stochastisch änderbare Verhaltensmuster aufgezeichnet. Dies erfolgt vorzugsweise nicht ausschliesslich in einer CPU oder einem zentralen Prozessor, sondern mit Einbezug neuronaler Netzwerke. Darunter werden in der Art von Nervenzellen mit ausstrahlenden Fasern verbundene Netzwerkrechner verstanden, welche wohl einer zentralen Software untergeordnet sind, jedoch weitgehend autonom arbeiten. Dabei wird zur Eingabe von Algorithmen und zur Alarmauslösung die Fuzzy-Logic, eine dem Fachmann bekannte unscharfe Logik, eingesetzt. Ursprünglich diente die Fuzzy-Logik dazu, unvollständige und/oder nicht exakte Datensätze zu beschreiben und maschinell aufzuarbeiten. Heute wird die Fuzzy-Logik auf breiter Basis in der Steuer- und Regeltechnik eingesetzt, insbesondere wenn mit konventionellen Reglern keine guten Ergebnisse erzeugt werden können.

Mit der neuronalen Vernetzung und der Fuzzy-Logic können adaptive, selbstlernende Algorithmen der Software ein nicht stochastisches Benutzerverhalten von wenigstens einer Person als systematisch erkennen und das gespeicherte Modell laufend anpassen. Die Auswertung eines solchen systematischen Benutzerverhaltens dient der Software als Vorhersagebasis für die wahrscheinlichsten Folgeaktionen, was gespeichert und zur Auslösung von Aktuatoren verwendet wird. Weiter kann eine Abweichung von bestimmten systematischen Benutzerverhalten einen Alarm auslösen. Dies erfolgt nicht sofort, sondern zweckmässig zeitverzögert, beispielsweise nach 5 bis 15 min.

Die adaptiven, selbstlernenden Algorithmen der Software können auch extern Steuersignale empfangen. Dies erfolgt beispielsweise über ein Verbindungsnetz von Datenbanken, insbesondere über Internet. Diese Steuersignale dienen der Auslösung von Aktuatoren, auch in Kombination mit internen Steuersignalen.

Nach einer weiteren Variante der Erfindung erfolgt eine automatische Empfindlichkeitsabstimmung auf den Benutzer. Dabei wird die Empfindlichkeit eines Automationssystems mit Bewegung durch Verkleinerung der Ansprechschwelle erhöht, wenn sich wenigstens eine Person im Raum aufhält und/oder sich darin bewegt. Der Wärmeunterschied aktiviert dabei eine zweite, empfindlichere Stufe, und der Melder erkennt feinste Körperbewegungen im Bereich von 10 bis 20 cm. Bei jeder detektierten Bewegung wird die vorausbestimmte oder durch das stochastische Verhalten der Person/en ermittelte Schaltzeit mit erhöhter Empfindlichkeit erneuert. Für Details wird auf die CH,A 684449 und die Publikation Infel-Info 1/96 Seiten 1 bis 4, verwiesen.

Falls während einer einstellbaren Zeitperiode eine vollständige Abwesenheit von Personen und/oder keine Aktivität festgestellt wird, stellt sich das Gebäudeautomationssystem automatisch auf einen Alarmmodus.

In bezug auf das Heim- und Gebäudeautomationssystem zur Durchführung des Verfahrens wird die Aufgabe erfindungsgemäss nach dem Kennzeichen von Patentanspruch 9 gelöst. Weiterbildende und spezielle Ausführungsformen des Automationssystems sind Gegenstand von abhängigen Patentansprüchen.

Die Netze mit den Rechnern sind vorzugsweise neuronal ausgebildet.

Die vernetzten Sensoren, im wesentlichen Bewegungsmelder aller Art, richten sich nach der Geometrie, der Ausgestaltung und der Möblierung der zu überwachenden Räume. Ein Präsenzmelder ECO-IR 360 der High Technology Systems AG, CH-8307 Effretikon, für Deckenmontage erlaubt volle 360° Abdeckung. Selbstverständlich können auch bestimmte Räume oder Teile eines Raumes von der Ueberwachung abgeschirmt bleiben, falls dies erwünscht ist. Im übrigen können auch Sensoren angeschlossen sein, welche lediglich der Alarmauslösung dienen, beispielsweise ein Rauchmelder oder Thermostat.

Die Vernetzung kann über das elektrische Installationsnetz erfolgen. Insbesondere in Neubauten, umfasst die Vernetzung wenigstens einen standardisierten Data-Bus, zweckmässig LON (Lokal Operierendes Netz) oder EIB (Europäischer Installations Bus ), oder PLC ( Power Line Communication).

Die Anwendungen des erfindungsgemässen Verfahrens sind praktisch unbeschränkt, insbesondere bietet sich die Steuerung von Beleuchtung, Heizung, Klima, Lüftung, Beschattung, Warmwasseraufbereitung, Steuerung elektrischer Geräte, wie Waschmaschinen, und/oder Alarmvorrichtungen usw. an.

Die Vorteile des erfindungsgemässen Verfahrens und der damit betriebenen Vorrichtung können wie folgt zusammengefasst werden:
- Die Vielzahl von möglichen Fallkombinationen muss nicht vorprogrammiert werden, es kann mit einfachen Regeln gearbeitet werden, wie beispielsweise "solange am Morgen nicht alle Personen im Badezimmer gewesen sind, wird die Heizung nicht abgeschaltet".
- Ein als systematisch erkanntes Benutzerverhalten wird als Vorhersagebasis für die wahrscheinlichsten stochastischen Folgeaktionen verwendet und entsprechende Aktuatoren ausgelöst. Das Benutzerverhalten wird laufend automatisch angepasst.
- Ein Abweichen von bestimmten systematischen Benutzerverhalten kann der zeitverzögerten Alarmauslösung dienen.
- Das Heim- und Gebäudeautomationssystem erlaubt eine namhafte Energieeinsparung, verbessert den Komfort und erhöht die Sicherheit der Benutzer.

Der Stand der Technik und die Erfindung werden anhand von je einem in der Zeichnung dargestellten Ausführungsbeispiel, welches letztere auch Gegenstand von abhängigen Ansprüchen ist, näher erläutert. Es zeigen schematisch:
- Fig. 1 eine bekannte Heizungssteuerung mit einem konventionellen Regelkreis, und
- Fig. 2 ein erfindungsgemässes Heim- und Gebäudeautomationssystem mit einem anwesenheits- und aktivitätsgesteuerten Regelkreis.

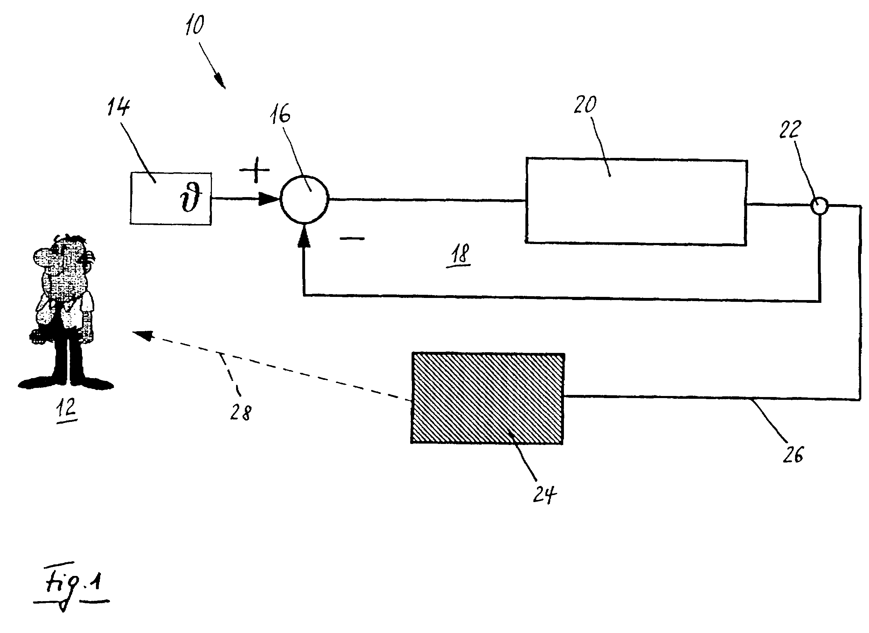

Eine bekannte Heizungssteuerung 10 gemäss Fig. 1 ist auf das Wohlbefinden eines Benutzers 12 ausgerichtet, welcher die ihm angenehme Raumtemperatur über einen manuell einstellbaren Thermostaten 14 wählt. Dieser gibt ein elektrisches Signal, den mit einem "+" bezeichneten Sollwert, an eine Summierstelle 16 ab. Ein konventioneller Regelkreis 18 führt über einen PID-Regler 20 zu einem Temperaturfühler 22 für die Vorlauftemperatur einer Heizungsanlage 24 und von dort zurück zur Summierstelle 16, wo der mit einem "-" bezeichnete Istwert zum Ermitteln der Regeldifferenz Soll-Ist eingespeist wird.

Zwischen dem Temperaturfühler 22 und der Heizungsanlage 24 ist eine Wasserleitung 26 für die Zufuhr des Heizmediums eingezeichnet. Mit einem gestrichelten Pfeil 28 wird das subjektive Temperaturempfinden des Benutzers 12 angedeutet. Falls dieser die Temperatur als zu hoch oder zu tief empfindet, verstellt er den Thermostaten 14 manuell, was einen neuen Sollwert für die Summierstelle 16 ergibt.

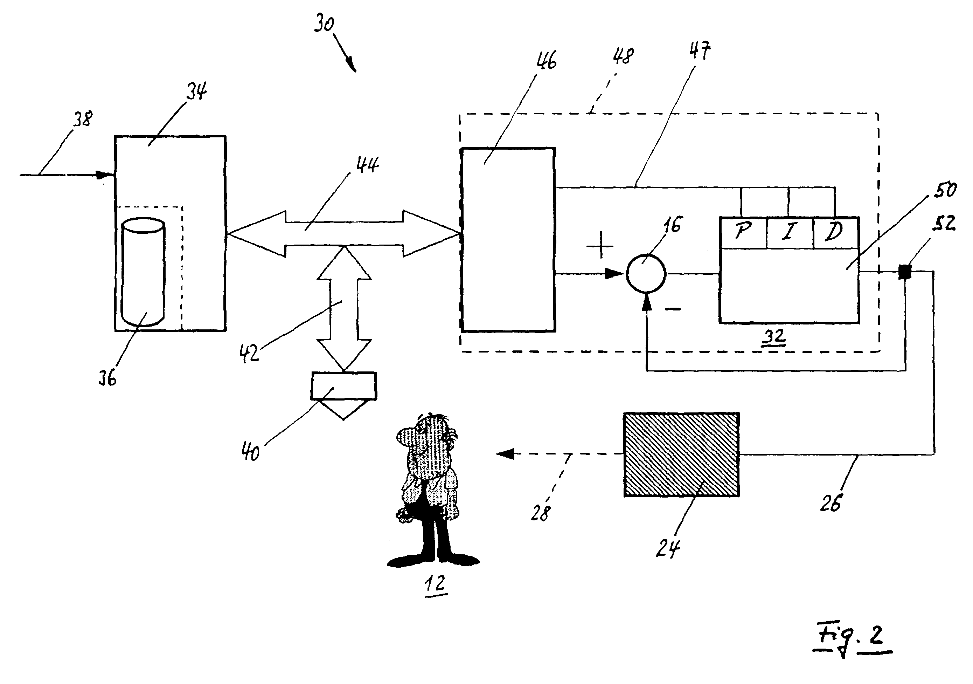

In Fig. 2 ist ein Heim- und Gebäudeautmationssystem 30 nach der Erfindung mit einem anwesenheits- und aktivitätsgesteuerten Regelkreis 32 dargestellt.

Ein Prozessor 34 mit der Software umfasst die adaptive Heimautomation und die veränderbare Verhaltsmuster-Datenbank 36. Mit einem Pfeil 38 ist ein Anschluss an das Internet angedeutet.

Die Anwesenheit und Aktivitäten des Benutzers 12 werden von einem Bewegungsmelder 40 überwacht, im vorliegenden Fall ein PIR-Sensor an sich bekannter Bauart. Die vom Bewegungsmelder erzeugten elektrischen Signale werden auf einen Daten-Bus 42 eingespeist, welcher in einen weiteren, ebenfalls mit einem Doppelpfeil dargestellten Daten-Bus 44 mündet. Dieser verbindet den Prozessor 34 mit einem Bus-Interface 46.

Das Bus-Interface 46 bildet mit dem anwesenheits- und aktivitätsgesteuerten Regelkreis 32 eine funktionelle Einheit, was mit einem gestrichelten Rechteck 48 angedeutet ist. Vom Bus-Interface 46 abzweigende elektrische Leiter 47 münden über adaptiv verstellbare Parameter P (proportional), I (integral) und D (differential) in den PID-Regler 50, über welchen der anwesenheits- und aktivitätsgesteuerte Regelkreis 32 führt.

Weiter gibt das Bus-Interface 46 mit einem "+" bezeichnete elektrische Impulse, die Sollwerte, an die Summierstelle 16 ab. Die mit einem "-" bezeichneten elektrischen Impulse für die Istwerte werden über den Regelkreis 32 zur Bildung der Regeldifferenz Soll-Ist eingespeist. P, I und D werden wie erwähnt adaptiv verstellt.

Je nach dem laufend angepassten Verhaltensmuster des Benutzers 12 löst die Datenbank 36 des Prozessors 34 und/oder dieser selbst bzw. die betreffenden Algorithmen über den Daten-Bus 44, das Bus-Interface 46 und den Regelkreis 32 einen Aktuator 52 aus, welcher die Wasserleitung 26 der Heizungsanlage 24 öffnet. Einfachheitshalber wird im übrigen nicht diese ganze Kette aufgezählt, sondern nur die Auslösung des Aktuators 52 erwähnt.

Beim Betreten des Raumes findet der Benutzer zur verhaltensmässig gesteuerten Zeit den Raum mit mininalem Energieverbrauch auf die von ihm gewünschte Temperatur geheizt vor.

### Beispiel 1

Bei der Umstellung von Sommerzeit auf Winterzeit und umgekehrt verschiebt sich der sonst übliche Tagesrhythmus von in einem Haushalt wohnenden Personen um 1 h. Das Heimautomationssystem registriert das geänderte Verhalten und wird entsprechend die Bereitstellung von warmem Brauchwasser in den Morgenstunden ebenfalls um diese Stunde verschieben, ohne dass dazu ein Eingriff des Benutzers erforderlich wäre. Die Umstellung wird vorbereitet, indem ein Signal empfangen und ausgewertet wird, mit welchem die Sommerzeit oder Winterzeit angekündigt wird.

### Beispiel 2

Eine alleinstehende Person verlässt nachts das Schlafzimmer jeweils kurzzeitig, um beispielsweise das WC aufzusuchen, kehrt jedoch immer spätestens nach 10 min wieder zurück. Sollte diese Person einmal das Schlafzimmer verlassen, dann jedoch verunfallen oder das Bewusstsein verlieren, so wird das System hieraus einen Alarm ableiten. Mit den Methoden der Fuzzy-Logic und der neuronalen Netze ist es nicht mehr erforderlich, alle möglichen Fälle und Kombinationen vorauszudenken und zu programmieren, erfindungsgemäss genügt es vielmehr, die einfache Regel "wenn unübliches Verhalten, dann zeitverzögert Alarm auslösen" einzugeben. Selbstverständlich kann für besondere Fälle, beispielsweise Aufstehen zum Lesen oder Fernsehen, der Alarm automatisch durch Bewegungsmelder oder manuell durch Knopfdruck überbrückt werden.

### Beispiel 3

Bei der Installation eines Heimautomationssystems wird im Startmodell für das Benutzerverhalten vorgesehen, dass die Familie morgens um 06.00 Uhr den Tag mit einer Dusche beginnt und dann zwischen 06.30 und 07.00 Uhr das Frühstück in der Küche einnimmt. Die Voraussetzung dieses Modells ist, dass das Badezimmer abhängig von den jeweiligen baulichen Gegebenheiten so frühzeitig beheizt wird, dass um 06.00 Uhr sicher eine gewünschte Raumtemperatur von z.B. 22°C erreicht ist. Ab 06.30 Uhr wird die Badezimmerheizung bereits wieder abgeschaltet. Analoges gilt für die Heizung der Küche.

Nach einiger Zeit ergibt eine Stundenplanänderung bei einem der Kinder, dass dieses das Badezimmer erst um 07.30 Uhr benutzt, die Küche hingegen überhaupt nicht. Dieses vom ursprünglichen Modell abweichende Verhalten wird von den implementierten Algorithmen der Software als systematisch erkannt und das Modell entsprechend angepasst. Die Badezimmerheizung wird bis um 08.00 Uhr auf 22°C gehalten. Die Heizung der Küche bleibt unverändert.

Tritt eine Abweichung von den üblichen Gewohnheiten nur sporadisch auf, so wird das Automationssystem über gespeicherte Wahrscheinlichkeitsfunktionen (probalistische Algorithmen) entsprechend der Auftretewahrscheinlichkeit eine Verlängerung der Beheizung des Badezimmers so wählen, dass bei Eintritt des Ereignisses eine schnellstmögliche Anpassung der Raumtemperatur erreicht und dennoch der Gesamtenergieverbrauch als Zusatzkriterium möglichst niedrig gehalten wird. Darüber hinaus wird das Automationssystem aufgrund der neuronalen Vernetzungsstruktur von Präsenz- und Aktivitätssensoren feststellen, dass dieser Fall dann eintritt, wenn die betreffende Person nicht spätestens um 06.25 Uhr in ihrem Zimmer entsprechend aktiv geworden ist.

Weiter können über eine externe, vorausschauende Information des meteorologischen Dienstes zusätzliche Optimierungen vorgenommen werden. Naht z.B. eine Schlechtwetterfront, so kann dies über Nacht zu einem Temperatursturz führen, welcher erforderlich macht, dass die Aufheizphase des Badezimmers früher einsetzt. Dank der Vorhersage hat das erfindungsgemässe Automationssystem diese Information vor Eintritt des Ereignisses zur Verfügung und kann das Aufheizkommando früher auslösen, als dies z.B. mit einem Aussentemperaturfühler der Fall wäre.

## Patentansprüche

1. Verfahren zum optimierten Steuern eines Heim- und Gebäudeautomationssystems (30) über Software und Sensoren (40) in Abhängigkeit der Anwesenheit von Personen (12), wobei selbstlernende Algorithmen der Software, gesteuert durch Signale von der Präsenz- und Aktivitätsüberwachung dienenden Sensoren (40), laufend das systematische und stochastische Verhalten wenigstens einer Person (12) speichern, sich anpassen und in Kombination mit veränderbaren, deterministischen Algorithmen zwecks Energieeinsparung und Komfortverbesserung bedarfsabhängig Aktuatoren (52) von Installationen (24) oder Installationsgruppen auslösen,
dadurch gekennzeichnet, dass
die selbstlernenden Algorithmen das Verhalten der Person/en (12) im jeweiligen Raum sowie über mehrere Räume hinweg erfassen und speichern, mit den veränderbaren, deterministischen Algorithmen unter Einbezug externer Parameter einen das Automationssystem (30) gesamthaft optimierenden Algorithmus bilden, und rückwirkend die veränderbaren, deterministischen Algorithmen entsprechend angepasst werden.

2. Verfahren nach Anspruch 1, dadurch gekennzeichnet, dass bei der Installation des Automationssystems (30) ein erstes Modell des Benutzerverhaltens von wenigstens einer Person (12) als Startsoftware in wenigstens einem vorzugsweise neuronalen Netzwerkrechner (34) eingegeben wird.

3. Verfahren nach Anspruch 1 oder 2, dadurch gekennzeichnet, dass bei einer Abweichung von bestimmten systematischen Benutzerverhalten Alarm ausgelöst wird, vorzugsweise nach einem einstellbaren Zeitintervall, insbesondere nach 5 bis 15 min.

4. Verfahren nach einem der Ansprüche 1 bis 3, dadurch gekennzeichnet, dass die Algorithmensteuerung und die Alarmauslösung mittels einer Fuzzy-Logik und neuronaler Netze erfolgen.

5. Verfahren nach einem der Ansprüche 1 bis 4, dadurch gekennzeichnet, dass das Automationssystem (30) über ein Verbindungsnetz zu Datenbanken oder externen Informationsquellen, wie über Internet (38), externe Steuersignale empfängt und zur Auslösung von Aktuatoren (52) auswertet.

6. Verfahren nach Anspruch 5, dadurch gekennzeichnet, dass als externe Informationsquellen die Aussentemperatur, Wetterprognosen und/oder Sicherheitsmodi verwendet werden.

7. Verfahren nach einem der Ansprüche 1 bis 6, dadurch gekennzeichnet, dass die Empfindlichkeit eines Automationssystems (30) mit Bewegungsmelder/n (40) durch Verkleinerung der Ansprechschwelle automatisch auf einen anwesenden Benutzer (12) abgestimmt wird.

8. Verfahren nach einem der Ansprüche 1 bis 7, dadurch gekennzeichnet, dass sich das Automationssystem (30) bei vollständiger Abwesenheit von Personen und/oder fehlender Aktivität automatisch auf einen Alarmmodus stellt.

9. Heim- und Gebäudeautomationssystem (30) zur Durchführung des Verfahrens nach einem der Ansprüche 1 bis 8, welches Automationssystem (30) über Aktuatoren (52), Installationen (24) oder Installationsgruppen ansteuert, mit wenigstens einem Sensor (40) pro Raum für die Präsenz- und Aktivitätsüberwachung von Personen (12), Regelkreisen (32) und Rechnern (34) zum optimierenden Steuern des Automationssystems (30) über Software, in Abhängigkeit von der Anwesenheit von Personen, wobei die in Netzen angeordneten Rechner (34) in der Software veränderbar implementierte, selbstlernende und deterministische Algorithmen zur kombinierten Auslösung von Aktuatoren (52) umfassen,
dadurch gekennzeichnet, dass
das Automationssystem (30) eine raumübergreifende Vernetzung der Sensoren (40) mit den Regelkreisen (32) umfasst, und eingangsseitige Signalgeber (38) für die gesamthafte und raumbezogene Anpassung der deterministischen Algorithmen zum Einbezug von externen Parametern integriert sind.

10. Automationssystem (30) nach Anspruch 9, dadurch gekennzeichnet, dass als eingangsseitige Sensoren Rauchfühler, Thermostaten und/oder Lichtsensoren integriert sind.

11. Automationssystem(30) nach Anspruch 9 oder 10, dadurch gekennzeichnet, dass eine neuronale Vernetzung mit Rechnern wenigstens einen standardisierten Daten-Bus (42, 44), vorzugsweise LON oder EIB, oder PLC umfasst.

12. Automationssystem (30) nach einem der Ansprüche 9 bis 11, dadurch gekennzeichnet, dass ein Bus-Interface (46) mit einem PID-Regler (50) und zur Übermittlung elektrischer Signale als positive Sollwerte mit wenigstens einer Summierstelle (16) verbunden ist, welche mit einem PID-Regler (50) und einem Aktuator (52) je in einen anwesenheits- und aktivitätsgesteuerten Regelkreis (32) integriert ist.

## Claims

1. Process for optimised control of a home and building automation system (30) by way of software and sensors (40) as a function of the presence of persons (12) where self-learning algorithms of the software, controlled by signals from the sensors (40) serving for presence and activity monitoring, continuously store the systematic and stochastic behaviour of at least one person (12), adapt and in combination with modifiable deterministic algorithms for the purpose of energy saving and comfort improvement, and trigger requirement-dependent actuators (52) of installations (24) or installation groups,
characterised in that
the self-learning algorithms detect and store the behaviour of person(s) (12) in each room and over several rooms, with the modifiable deterministic algorithms, with reference to external parameters, form an algorithm optimising the automation system (30) as a whole, and the modifiable deterministic algorithms are adapted accordingly as feedback.

2. Process according to claim 1, characterised in that on installation of the automation system (30) a first model of user behaviour of at least one person (12) is entered as starting software in at least one preferably neuronal network computer (34).

3. Process according to claim 1 or 2, characterised in that on deviation from certain systematic user behaviour alarms are triggered, preferably after an adjustable time interval, in particular after 5 to 15 minutes.

4. Process according to any of claims 1 to 3, characterised in that the algorithm control and alarm triggering take place by means of fuzzy logic and neuronal networks.

5. Process according to any of claims 1 to 4, characterised in that the automation system (30) by way of a connecting network to databases or external information sources and by way of the Internet (38), receives external control signals and analyses these to trigger actuators (52).

6. Process according to claim 5, characterised in that as external information sources, the external temperature, weather prognoses and/or safety modes are applied.

7. Process according to any of claims 1 to 6, characterised in that the sensitivity of an automation system (30) with movement sensor(s) (40) can be modified automatically to suit a user (12) present by reducing the response threshold.

8. Process according to any of claims 1 to 7, characterised in that the automation system (30), on total absence of persons and/or lack of activity, automatically switches to an alarm mode.

9. Home and building automation system (30) for the performance of the process according to any of claims 1 to 8, where said automation system (30) triggers, by way of actuators (52), installations (24) or installation groups, with at least one sensor (40) per room for the presence and activity monitoring of persons (12), control loops (32) and computers (34) for optimum control of the automation system (30) by way of software as a function of the presence of persons, where the computers (34) arranged in the networks have in their software modifiably implemented, self-learning and deterministic algorithms for combined triggering of actuators (52),
characterised in that
the automation system (30) comprises a networking over several rooms of the sensors (40) with the control loops (32), and signal emitters (38) on the input side for the overall and room-related adaptation of the deterministic algorithms with reference to external parameters.

10. Automation system (30) according to claim 9, characterised in that as sensors on the input side, smoke sensors, thermostats and/or light sensors are used.

11. Automation system (30) according to claim 9 or 10, characterised in that a neuronal networking with computers comprises at least one standardised databus (42, 44) preferably LON or EIB or PLC.

12. Automation system (30) according to any of claims 9 to 11, characterised in that a bus interface (46) is connected to a PID regulator (50) and, to transfer electrical signals as positive nominal values, to at least one summing point (16) which is integrated with a PID regulator (50) and an actuator (52) in a presence and activity-controlled control loop (32).

## Revendications

1. Procédé de commande optimisée d'un système (30) d'automatisation domestique et d'immeuble au moyen d'un logiciel et de capteurs (40) en fonction de la présence de personnes (12), dans lequel des algorithmes à apprentissage automatique du logiciel mémorisent en permanence le comportement systématique et stochastique d'au moins une personne (12) sous commande de signaux provenant de capteurs (40) servant à surveiller la présence et l'activité, s'adaptent et déclenchent, en combinaison avec des algorithmes déterministes modifiables, des actionneurs (52) d'installations (24) ou de groupes d'installations selon les besoins afin d'économiser l'énergie et d'améliorer le confort, caractérisé en ce que les algorithmes d'apprentissage automatique détectent et mémorisent le comportement de la personne ou des personnes (12) dans le local respectif ainsi que dans plusieurs autres locaux, forment un algorithme qui optimise dans son ensemble le système (30) d'automatisation au moyen des paramètres déterministes modifiables en intégrant des paramètres externes, et les algorithmes déterministes modifiables sont adaptés de façon correspondante en rétroaction.

2. Procédé selon la revendication 1, caractérisé en ce qu'un premier modèle du comportement d'utilisateur d'au moins une personne (12) est introduit, lors de l'installation du système (30) d'automatisation, comme logiciel initial dans au moins un ordinateur (34) de réseau de préférences neuronal.

3. Procédé selon la revendication 1 ou la revendication 2, caractérisé en ce qu'une alarme est déclenchée en cas d'écart par rapport à un comportement systématique défini d'utilisateur, de préférence après un intervalle de temps réglable, en particulier un intervalle de 5 à 15 minutes.

4. Procédé selon l'une quelconque des revendications 1 à 3, caractérisé en ce que la commande des algorithmes et le déclenchement d'alarme s'effectuent sous l'effet d'une logique floue et de réseaux neuronaux.

5. Procédé selon l'une quelconque des revendications 1 à 4, caractérisé en ce que le système (30) d'automatisation reçoit des signaux externes de commande par l'intermédiaire d'un réseau de connexion à des banques de données ou à des sources externes d'information, par exemple par l'Internet (38), et qu'il les évalue pour déclencher des actionneurs (52).

6. Procédé selon la revendication 5, caractérisé en ce que la température extérieure, des prévisions météorologiques et/ou d'autres modes de sécurité sont utilisées comme sources externes d'information.

7. Procédé selon l'une quelconque des revendications 1 à 6, caractérisé en ce que la sensibilité d'un système (30) d'automatisation qui inclut un ou plusieurs détecteur(s) (40) de mouvement est adaptée automatiquement à un utilisateur présent (12) par en réduisant le seuil de réponse.

8. Procédé selon l'une quelconque des revendications 1 à 7, caractérisé en ce que le système (30) d'automatisation passe automatiquement en mode d'alarme en l'absence totale de personnes et/ou en l'absence d'activité.

9. Système (30) d'automatisation domestique et d'immeuble destiné à mettre en oeuvre le procédé selon l'une quelconque des revendications 1 à 8, système (30) d'automatisation qui commande des installations (24) ou des groupes d'installations par l'intermédiaire d'actionneurs (52), et qui comporte au moins par local un capteur (40) de surveillance de la présence et de l'activité de personnes (12), des circuits de régulation (32) et des ordinateurs (34) pour commander de façon optimale le système (30) d'automatisation au moyen de logiciels en fonction de la présence de personnes, dans lequel les ordinateurs (34) agencés dans les réseaux comprennent des algorithmes déterministes à apprentissage automatique mis en application de façon modifiable en vue d'un déclenchement combiné d'actionneurs (52), caractérisé en ce que le système (30) d'automatisation comprend une connexion des capteurs (40) de plusieurs locaux en réseau avec les circuits de réglage (32) et que des émetteurs (38) de signaux sont intégrés côté entrée pour introduire des paramètres externes afin d'adapter les algorithmes déterministes de façon globale et rapportée aux locaux.

10. Système (30) d'automatisation selon la revendication 9, caractérisé en ce que des capteurs de fumée, des thermostats et/ou des capteurs de lumière sont intégrés comme capteurs côté entrée.

11. Système (30) d'automatisation selon la revendication 9 ou 10, caractérisé en ce qu'une connexion neuronal avec des ordinateurs comprend au moins un bus normalisé (42, 44) de données, de préférence un LON ou un EIB ou un PLC.

12. Système (30) d'automatisation selon l'une quelconque des revendications 9 à 11, caractérisé en ce qu'une interface (46) de bus est connectée, d'une part à un régulateur (50) de PID et d'autre part, pour communiquer des signaux électriques sous forme de valeurs de consigne positives, à au moins un additionneur (16) qui est intégré avec un régulateur PID (50) et avec un actionneur (52) chacun dans un circuit de réglage (32) commandé par une présence et une activité.
